(19)

Europäisches
Patentamt
European
Patent Office
Office européen
des brevets

(11) **EP 3 929 684 B1**

(12) **EUROPEAN PATENT SPECIFICATION**

(45) Date of publication and mention
of the grant of the patent:
**04.10.2023 Bulletin 2023/40**

(21) Application number: **21177186.0**

(22) Date of filing: **01.06.2021**

(51) International Patent Classification (IPC):
**G05B 23/02** *(2006.01)*

(52) Cooperative Patent Classification (CPC):
**G05B 23/0221**

(54) **DATA MANAGEMENT SYSTEM, DATA MANAGEMENT METHOD, AND DATA MANAGEMENT PROGRAM**

DATENVERWALTUNGSSYSTEM, DATENVERWALTUNGSVERFAHREN UND
DATENVERWALTUNGSPROGRAMM

SYSTÈME, PROCÉDÉ ET PROGRAMME DE GESTION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2020 JP 2020110043**

(43) Date of publication of application:
**29.12.2021 Bulletin 2021/52**

(73) Proprietor: **Yokogawa Electric Corporation
Tokyo 180-8750 (JP)**

(72) Inventors:
• **EMA, Nobuaki
Tokyo, 180-8750 (JP)**
• **YOSHIDA, Yoshitaka
Tokyo, 180-8750 (JP)**

(74) Representative: **Grünecker Patent- und
Rechtsanwälte
PartG mbB
Leopoldstraße 4
80802 München (DE)**

(56) References cited:
**EP-A2- 0 117 525     US-A- 4 691 233**

• **Mit: "Signal Processing Continuous and
discrete", , 31 December 2008 (2008-12-31),
pages 1-11, XP055859478, Retrieved from the
Internet:
URL:http://citenpl.internal.epo.org/wf/web
/citenpl/citenpl.html?_url=https%3A%2F%2Fo
cw.mit.edu%2Fcourses%2Fmechanical-enginee
r ing%2F2-161-signal-processing-continuous-a
nd-discrete-fall-2008%2Fstudy-materials%2F
updownsampling.pdf [retrieved on 2021-11-09]**
• **Lüke Hans Dieter: "Signalübertragung", , 31
December 1995 (1995-12-31), pages 204-206,
XP055859511, Berlin Retrieved from the Internet:
URL:https://link.springer.com/book/10.1007
/978-3-642-53901-5 [retrieved on 2021-11-09]**

**Description**

BACKGROUND

1. TECHNICAL FIELD

The present invention relates to a data management system, a data management method, and a data management program.

2. RELATED ART

In Patent document 1, it is described that "the moving average processing unit 104 performs moving average processing on the plant data stored in the plant data history filing unit 103."

EP 0 117 525 A2 discloses a quantizer for a DPCM encoder.

"Signal Processing Continuous and discrete", 31 December 2008, pages 1-11, Retrieved from the Internet: URL:http://citenpl.internal.epo.org/wf/web/citenpl/citenpl.html?                                                    _url=https%3A%2F%2Focw.mit.edu%2Fcourses%2Fmechanical-  engineering%2F2-161-signal-processing-continuous-and-discrete- fall-2008%2Fstudy-materials%2Fupdownsampling.pdf [retrieved on 2021 -11 -09] publishes down-sampling (decimation) by an integer factor and up and down-sampling with a non-integer factor.

Lüke Hans Dieter: "Signaliibertragung", 31 December 1995, pages 204-206, Berlin [retrieved on 2021-11-09] discloses DPCM.

US 4,691,233 discloses rate buffer control of difference signal decimation and interpolation for adaptive differential pulse code modulator.

[Prior Art Documents]

[Patent Document]

Patent document 1: Japanese Patent Application Publication No. 2011-253491

GENERAL DISCLOSURE

The invention is disclosed by a system according to claim 1.

The data size reduction unit has a low-pass filter for processing the measurement data.

The data management system may further include a property changing unit capable of changing a filter property of the low-pass filter.

The data management system may further include a bit width reduction unit configured to reduce a bit width of the differential data to be recorded.

The data management system may further include a data erasing unit configured to erase the recorded measurement data.

The data management system may further include a data receiving unit configured to receive the reduced data from the other data utilization apparatus.

The data management system may further include a data reproduction unit configured to reproduce the measurement data using the differential data and the reduced data.

The data transmission unit may transmit the differential data to the other data utilization apparatus in response to a request from the other data utilization apparatus.

The data erasing unit may erase the recorded measurement data in response to elapse of a predetermined time.

The data erasing unit may erase the recorded measurement data in response to remaining recordable capacity for the measurement data falling below a predetermined threshold.

The invention is also disclosed by a method according to claim 10.

The invention is also disclosed by a computer program according to claim 11.

The summary clause does not necessarily describe all necessary features of the embodiments of the present invention. The present invention may also be a sub-combination of the features described above.

BRIEF DESCRIPTION OF THE DRAWINGS

Fig. 1 illustrates an example of a block diagram of a data management system 100 according to the present embodiment, along with a plant 10.

Fig. 2 illustrates an example of a flow for managing measurement data by the data management system 100 according to the present embodiment.

Fig. 3 illustrates an example of measurement data managed by the data management system 100 according to the present embodiment.

Fig. 4 illustrates an example of reduced data generated by the data management system 100 according to the present embodiment.

Fig. 5 illustrates an example of differential data generated by the data management system 100 according to the present embodiment.

Fig. 6 illustrates an example of a block diagram of the data management system 100 according to a variant of the present embodiment.

Fig. 7 illustrates an example of a block diagram of the data management system 100 according to another variant of the present embodiment.

Fig. 8 illustrates an example of a flow for reproducing the measurement data by the data management system 100 according to another variant of the present embodiment.

Fig. 9 illustrates an example of a computer 2200 in which a plurality of aspects of the present invention may be entirely or partially embodied.

DESCRIPTION OF EXEMPLARY EMBODIMENTS

Hereinafter, the present invention will be described through embodiments of the invention, but the following embodiments do not limit the claimed invention. In addition, not all combinations of features described in the embodiments are necessarily essential to solving means of the invention.

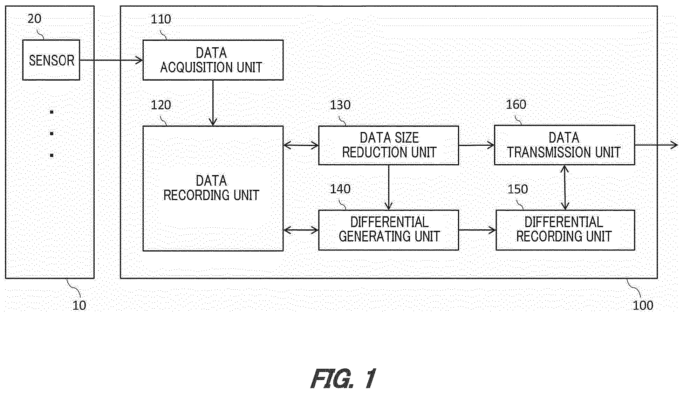

Fig. 1 illustrates an example of a block diagram of a data management system 100 according to the present embodiment, along with a plant 10. In this figure, a case in which the data management system 100 targets, for management, measurement data acquired from at least one sensor 20 provided in the plant 10 is illustrated as an example. However, it is not limited thereto. The data management system 100 may target, for management, measurement data from one or more sensors 20 provided anywhere that is different from the plant 10.

Other than an industrial plant such as a chemical plant, the plant 10 may be a plant for managing and controlling gas field, oil field or the like and the surrounding thereof, a plant for managing and controlling power generation such as hydraulic power generation, thermal power generation, and nuclear power generation, a plant for managing and controlling environmental power generation such as photovoltaic power generation and wind power generation, a plant for managing and controlling water supply and sewerage, a dam or the like, and the like. Such a plant 10 may be provided with one or more sensors 20.

The sensor 20 may be capable of acquiring measurement data obtained by measuring a measurement target;. The sensor 20 may be, for example, a sensor provided in an OT (Operational Technology) area (for example, a sensor for process control (measurement)) or an IoT (internet of Things) sensor, and may be an industrial sensor connected to or integrally formed with one or more field device provided in the plant, as an example.

In addition, a field device provided in such a plant may be, for example, a pressure gauge, a flow meter, a sensor device such as a temperature sensor, a valve device such as a flow control valve or an on-off valve, an actuator device such as a fan or a motor, an imaging device such as a camera or a video camera for capturing a situation or an object in the plant, an audio device such as a microphone or a speaker for collecting noises or the like in the plant or emitting an alarm or the like, and a location detection device for outputting location information of each device, or the like.

The data management system 100 according to the present embodiment may target, for management, measurement data obtained by measurement by the sensor 20 itself or measurement; data obtained by measurement inside the field device, such as temperature, pressure, flow, acceleration, magnetic field, location, camera image, on/off data of a switch, sound, and a combination thereof, for example.

The data management system 100 according to the present embodiment acquires and records the measurement data from one or more sensor 20. The data management system 100 then generates reduced data obtained by reducing the amount of data of measurement data and transmits the same to another apparatus, as well as generates differential data indicating a difference between the measurement data and the reduced data and records the same in itself.

The data management system 100 may be a computer such as a PC (personal computer), a tablet computer, a smartphone, a workstation, a server computer, or a general-purpose computer, or may be a computer system in which a plurality of computers are connected to each other. Such a computer system is also a computer in a broad sense. Moreover, the data management system 100 may be implemented by one or more virtual computer environments that can be executed in a computer. Alternatively, the data management system 100 may be a dedicated computer designed for management of data, or may be a dedicated hardware implemented by dedicated circuitry. Moreover, when the data management system 100 can be connected to the Internet, the data management system 100 may be implemented by a cloud computing.

The data management system 100 includes a data acquisition unit 110, a data recording unit 120, a data size reduction unit 130, a differential generating unit 140, a differential recording unit 150, and a data transmission unit 160. Note that these blocks are functional blocks that are respectively separated in terms of functions, and may not necessarily be consistent with an actual device configuration. That is, even when one block is illustrated in the present drawing, the block may not necessarily be configured by a single device. In addition, even when separate blocks are illustrated in the present drawing, those blocks may not necessarily be configured by separate devices.

The data acquisition unit 110 is configured to acquire measurement data obtained by measuring a measurement target. As an example, the data acquisition unit 110 may be a communication unit, and acquires measurement data obtained by measuring the measurement target from each of the one or more sensors 20 via a communication network in time series, for example.

Such a communication network may be a network connecting a plurality of computers. For example, the communication network may be a global network interconnecting a plurality of computer networks, and, as an example, the communication network may be the Internet using the Internet Protocol or the like. Alternatively, the communication network may be implemented by a dedicated line. That is, the data acquisition unit 110 can also communicate directly or indirectly between a mobile phone, a smartphone, a 4th generation (4G) terminal, a 5th generation (5G) terminal and the like to acquire measurement data.

Note that, although a case in which the data acquisition unit 110 acquires measurement data from one or more sensors 20 via a communication network is illustrated as an example in the above-mentioned description, it is not limited thereto. The data acquisition unit 110 may, for example, acquire measurement data from each of the one or more sensors 20 via other means that is different from a communication network, such as a user input or various memory devices.

The data acquisition unit 110 may acquire measurement data such as flow rate, pressure, temperature, and a combination thereof, for example, from each of the one or more sensors 20. Moreover, the data acquisition unit 110 may acquire, as the measurement data, a value generated by using a formula based on these data. The data acquisition unit 110 supplies the measurement data acquired from each of the one or more sensors 20 to a data recording unit 120. Note that, although a case in which the data acquisition unit 110 directly supplies the measurement data acquired from the sensor 20 to the data recording unit 120 is illustrated as an example in the above-mentioned description, the data acquisition unit 110 may process the measurement data acquired from the sensor 20 and supply the same to the data recording unit 120. For example, the data acquisition unit 110 may convert the measurement data acquired from the sensor 20 into a frequency domain by discrete Fourier transform, discrete cosine transform or the like before supplying the same to the data recording unit 120.

The data recording unit 120 records the acquired measurement data. As an example, the data recording unit 120 may record the measurement data from one or more sensors 20 supplied from the data acquisition unit 110 in time series for each sensor 20.

The data size reduction unit 130 may be capable of accessing the data recording unit 120, and browses the measurement data from the one or more sensors 20 recorded in the data recording unit 120. The data size reduction unit 130 then generates reduced data obtained by reducing the amount of data of the recorded measurement data. As an example, the data size reduction unit 130 may have a low-pass filter for processing the measurement data, and such a low-pass filter may be formed by a digital filter or may be formed by an analog filter. The data size reduction unit 130 may then apply the low-pass filter to the measurement data and the filtered data is sampled with wide interval to generate the reduced data. This will be described later. The data size reduction unit 130 supplies the reduced data generated for each sensor 20 in time series to the differential generating unit 140 and the data transmission unit 160.

The differential generating unit 140 may be capable of accessing the data recording unit 120, and browses the measurement data from the one or more sensors 20 recorded in the data recording unit 120. The differential generating unit 140 then generates differential data indicating the difference between the recorded measurement data and the reduced data supplied from the data size reduction unit 130. The differential generating unit 140 supplies the differential data generated for each sensor 20 in time series to the differential recording unit 150.

The differential recording unit 150 records the differential data. As an example, the differential recording unit 150 may record, for each sensor 20 in time series, the differential data supplied from the differential generating unit 140.

The data transmission unit 160 transmits the reduced data to another data utilization apparatus utilizing data. As an example, the data transmission unit 160 may transmit the reduced data supplied from the data size reduction unit 130 to another data utilization apparatus that is different from the data management system 100. In addition, the data transmission unit 160 may be capable of accessing the differential recording unit 150, and may transmit the differential data read from the differential recording unit 150 to another data utilization apparatus in response to a request from the other data utilization apparatus.

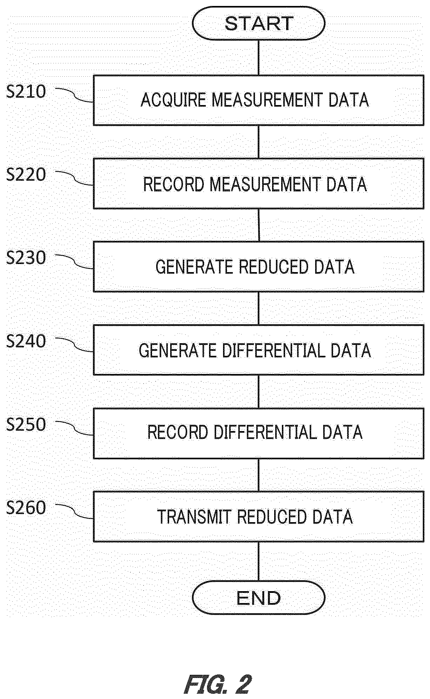

Fig. 2 illustrates an example of a flow for managing measurement data by the data management system 100 according to the present embodiment.

At step 210, the data management system 100 acquires measurement data. As an example, the data acquisition unit 110 acquires measurement data obtained by measuring the measurement target from each of the one or more sensors 20 in time series via a communication network. The data acquisition unit 110 supplies the measurement data acquired from each of the one or more sensors 20 to the data recording unit 120.

At step 220, the data management system 100 records the measurement data. As an example, the data recording unit 120 records the measurement data supplied from the data acquisition unit 110 at step 210 for each sensor 20 in time series.

At step 230, the data management system 100 generates the reduced data. As an example, the data size reduction unit 130 browses the measurement data recorded by the data recording unit 120 at step 220. The data size reduction unit 130 then generates reduced data obtained by reducing the amount of data of the recorded measurement data.

The data size reduction unit 130 may have a low-pass filter for processing the measurement data, for example. As an example, the data size reduction unit 130 may calculate a moving average $A_m$ at time $T = m$ from the following formula. Here, $X_m$ indicates a value of the measurement data at time $T = m$. In addition, n indicates the number of the latest measurement data used for moving average computation. The data management system 100 can adjust the filter property by changing the value of this n, for example.

[Formula 1]

$$A_m = \frac{X_m + X_{m-1} + \cdots + X_{m-n+1}}{n}$$

That is, assuming n = 10, for example, the data size reduction unit 130 calculates a moving average $A_{10}$ at time $T = 10$ by adding each value of measurement data $X_1$ to $X_{10}$ at time $T = 1$ to 10, and dividing the same by 10. The data size reduction unit 130 then calculates the moving average $A_{11}$ at time $T = 11$ by incrementing m, adding each value of the measurement data $X_2$ to $X_{11}$ at time $T = 2$ to 11, and dividing the same by 10. Similarly, the data size reduction unit 130 calculates the moving average $A_{12}$ at time $T = 12$ by adding each value of the measurement data $X_3$ to $X_{12}$ at time $T = 3$ to 12, and dividing the same by 10.

The data size reduction unit 130 applies the low-pass filter to the measurement data acquired from the sensor 20 while thus shifting the targeted time for computation. The data size reduction unit 130 then generates reduced data by sampling the data obtained by applying the low-pass filter to the measurement data with a wider interval. In this manner, by applying moving average (a type of a low-pass filter) to raw measurement data (that is, by limiting the frequency band to a lower frequency), the number of sampling on a time axis can be reduced (for example, reduced to half) based on sampling theorem. Therefore, the sampling interval on the time axis becomes wider and the amount of data is reduced.

Note that, a case in which moving average processing is performed as an example of applying low-pass filter to the measurement data by the data size reduction unit 130 has been illustrated as an example in the above-mentioned description. However, this is not limited thereto. In a case where more importance is placed on the waveform quality, for example, the data size reduction unit 130 may use a Bessel-Thomson type low-pass filter when reducing the amount of data of the measurement data. Note that, in this case, it may be better for the data size reduction unit 130 to set the sampling interval to be narrower than a case where moving average processing is performed. The data size reduction unit 130 supplies the reduced data thus generated for each sensor 20 in time series to the differential generating unit 140 and the data transmission unit 160.

At step 240, the data management system 100 generates differential data. As an example, the differential generating unit 140 calculates the difference between the measurement data recorded by the data recording unit 120 at step 220 and the reduced data supplied from the data size reduction unit 130 at step 230 in time series, and generates differential data indicating said difference. For example, the differential generating unit 140 acquires a moving average $A_m$ at each time by performing interpolation operation on the reduced data supplied from the data size reduction unit 130. The differential generating unit 140 then generates the differential data $D_{10}$ at time T = 10 by subtracting the moving average $A_{10}$ at time T = 10 from the measurement data $X_{10}$ at time T = 10, for example. Similarly, the differential generating unit 140 generates the differential data $D_{11}$ at time T = 11 by subtracting the moving average $A_{11}$ at time T = 11 from the measurement data $X_{11}$ at time T = 11. Note that, a case in which the moving average $A_m$ is acquired by the differential generating unit 140 performing interpolation operation on the reduced data after being reduced in the number of sampling has been illustrated as an example in the above-mentioned description. However, it is not limited thereto. The data size reduction unit 130 may supply, to the differential generating unit 140, the data before being reduced in the number of sampling, that is, the moving average $A_m$ at each time. The differential generating unit 140 may then generate the differential data D by subtracting, from the measurement data, the moving average $A_m$ supplied from the data size reduction unit 130. The differential generating unit 140 supplies the differential data thus generated for each sensor in time series to the differential recording unit 150.

At step 250, the data management system 100 records the differential data. As an example, the differential recording unit 150 records the differential data supplied from the differential generating unit 140 at step 240 for each sensor in time series.

At step 260, the data management system 100 transmits the reduced data. As an example, the data transmission unit 160 transmits the reduced data supplied from the data size reduction unit 130 at step 230 to another data utilization apparatus that is different from the data management system 100.

In this manner, the data management system 100 ends the flow. Note that, a case in which only the reduced data is transmitted to the other data utilization apparatus by the data management system 100 is illustrated as an example in the above-mentioned description. However, it is not limited thereto. The data management system 100 may transmit the differential data, in addition to the reduced data, to the other data utilization apparatus. In this case, as an example, the data transmission unit 160 may transmit the differential data read from the differential recording unit 150 to another data utilization apparatus in response to a request from the other data utilization apparatus.

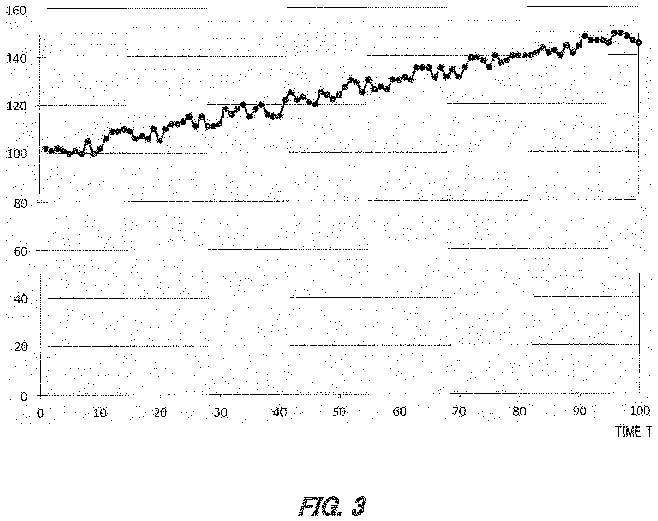

Fig. 3 illustrates an example of measurement data managed by the data management system 100 according to the present embodiment. In this figure, the horizontal axis indicates the time T, and the vertical axis indicates a value of the measurement data. Also, in this figure, the dots indicate sampling points. In this figure, as an example, measurement data $X_1$ to $X_{100}$ acquired with an interval of one second at time T = 1 to 100 [s] from one sensor 20 is shown in time series. The data management system 100 according to the present embodiment acquires and records such measurement data, for example.

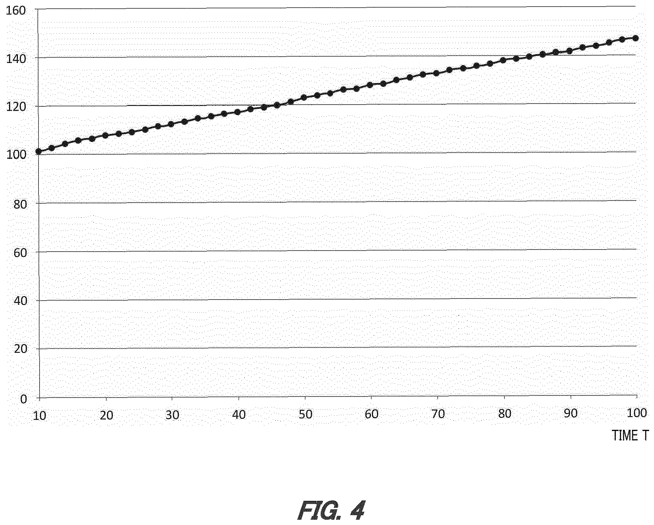

Fig. 4 illustrates an example of reduced data generated by the data management system 100 according to the present embodiment. In this figure, the horizontal axis indicates the time T, and the vertical axis indicates a value of the reduced data. In addition, in this figure, the dots indicate sampling points after the number of sampling has been reduced (for example, reduced into half). This figure illustrates, as an example, reduced data obtained by performing sampling on the moving average $A_{10}$ to $A_{100}$ at an interval of two seconds, wherein the moving average $A_{10}$ to $A_{100}$ is calculated, using the measurement data indicated in Fig. 3, using Equation 1 assuming n =10, for time T = 10 to 100. The data management system 100 according to the present embodiment transmits, to another data utilization apparatus utilizing data, reduced data obtained by reducing the amount of data as illustrated in this figure, for example, instead of raw measurement data as illustrated in Fig. 3.

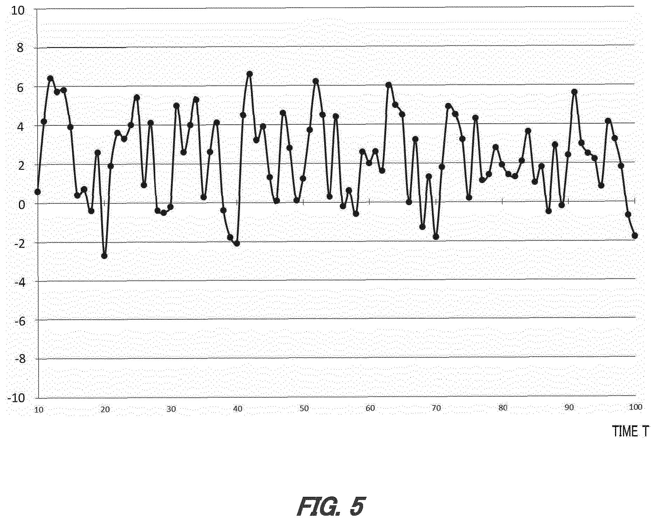

Fig. 5 illustrates an example of differential data generated by the data management system 100 according to the present embodiment. In this figure, the horizontal axis indicates the time T, and the vertical axis indicates a value of the differential data. Also, in this figure, the dots indicate sampling points. This figure illustrates, as an example, differential data $D_{10}$ to $D_{100}$ obtained by calculating the difference between the measurement data $X_{10}$ to $X_{100}$ in Fig. 3 at time T = 10 to 100 and the moving average $A_{10}$ to $A_{100}$ acquired by performing interpolation operation on the reduced data in Fig. 4. The data management system 100 according to the present embodiment transmits the reduced data as illustrated in Fig. 4 to another data utilization apparatus while recording the differential data as illustrated in this figure in itself.

It is expected that an amount of data will explosively increase, for example, when a process control system in the OT (Operational Technology) region is coupled to a system in the IT (Information Technology) region or the like. In such a case, it is not realistic to transmit all of the measurement data acquired in the OT region as is to another data utilization apparatus in the IT region, and it is necessary to reduce or select the amount of data. In addition, generally, not all of the measurement data acquired in the OT region is necessary for the other data utilization apparatus in the IT region, and it is often the case that only overview information (large trend) should be acquired. In such a case, information on slight increase and decrease in precise data or the like may be excessive for the other data utilization apparatus. Here, a technique for performing moving average processing on plant data is conventionally known. However, the conventional technique performs moving average processing as one of the parameter for detecting abnormality at a plant, and does not perform moving average processing in order to reduce the amount of data to be transmitted.

In contrast, the data management system 100 according to the present embodiment generates reduced data obtained by reducing the amount of data of measurement data and transmits the same to another data utilization apparatus, as well as generate differential data indicating a difference between the measurement data and the reduced data and record the same in itself. In this manner, the data management system 100 according to the present embodiment can reduce the amount of data to be transmitted to the other data utilization apparatus while satisfying the request by the other data utilization apparatus. On the other hand, since the data management system 100 according to the present embodiment records the differential data in itself, control using detailed data can be continuously performed, and measures can be taken against security issues such as leakage of raw measurement data or the like by having the data distributed. In addition, the data management system 100 according to the present embodiment only reduces the amount of data of the measurement data afterwards, and continues to acquire and record measurement data. In this manner, with the data management system 100 according to the present embodiment, even in a case where there is a sudden change on the process side, for example, said measurement data can be used for real-time control.

In addition, the data management system 100 according to the present embodiment reduces the amount of data of the measurement data by acquiring the data obtained by applying low-pass filter to the measurement data with widened sampling interval. In this way, with the data management system 100 according to the present embodiment, the amount of data can be reduced by enlarging the sampling interval without performing complex computation.

In addition, the data management system 100 according to the present embodiment also transmits the differential data, in addition to the reduced data, to another data utilization apparatus in response to a request from the other data utilization apparatus. In this manner, with the data management system 100 according to the present embodiment, while transmission to the other data utilization apparatus is limited to only the reduced data in principle, since the differential data is also additionally transmitted in response to a request from the other data utilization apparatus, data can be flexibly transmitted in response to a request by the other data utilization apparatus.

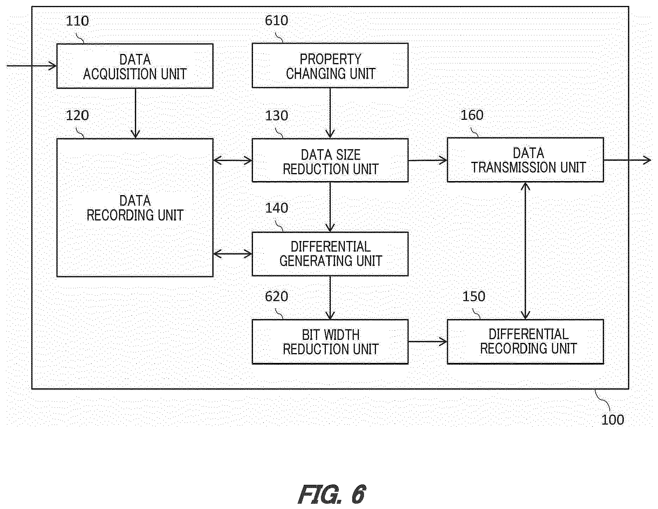

Fig. 6 illustrates an example of a block diagram of the data management system 100 according to a variant of the present embodiment. In Fig. 6, components having the same function and configuration as in Fig. 1 are given the same reference numerals, and the following describes only differing points. The data management system 100 according to the present variant further includes a property changing unit 610 and a bit width reduction unit 620.

As described above, the data size reduction unit 130 may have a low-pass filter for processing the measurement data. The property changing unit 610 is capable of changing the filter property of such a low-pass filter. As an example, the property changing unit 610 may be capable of adjusting the pass band of the low-pass filter by changing the value of n in Equation 1. Alternatively or additionally, the property changing unit 610 may be capable of changing the type of the low-pass filter itself, such as moving average or a Bessel-Thomson type. The property changing unit 610 may passively change the filter property in accordance with a user input, or in accordance with an instruction from another apparatus. In addition, the property changing unit 610 may actively change the filter property in accordance with the property of the measurement data (for example, data interval, fluctuation characteristics or the like). The data size reduction unit 130 then optimizes the sampling interval for acquiring the data, in accordance with the filter property of the low-pass filter.

In addition, although a case in which the differential generating unit 140 supplies the generated differential data to the differential recording unit 150 has been illustrated as an example in the above-mentioned description, with the data management system 100 according to the present variant, the differential generating unit 140 supplies the generated differential data to the bit width reduction unit 620 instead of the differential recording unit 150.

The bit width reduction unit 620 reduces the bit width of the differential data to be recorded. For example, the differential data illustrated in Fig. 5 has a smaller range (the difference between the maximum value and the minimum value) than the measurement data illustrated in Fig. 3. In such a case, even if the bit width of the numerical axis of the differential data is reduced (for example, reduced from 16 bits to 8 bits), it may be sufficient for the resolution of the numerical axis. Therefore, the bit width reduction unit 620 can reduce the bit width for the differential data obtained by subtracting a moving average from the measurement data. In this manner, the bit width reduction unit 620 can reduce the amount of data required for recording the differential data. The bit width reduction unit 620 may passively determine the extent to which the bit width is to be reduced in accordance with user input or in accordance with an instruction from another apparatus. In addition, the bit width reduction unit 620 may actively determine the extent to which the bit width is to be reduced in accordance with the property of the differential data (for example, the difference between the maximum value and the minimum value or the like) or the filter property adjusted by the property changing unit 610
The bit width reduction unit 620 supplies the differential data thus reduced in bit width to the differential recording unit 150.

In the present variant, the differential recording unit 150 then records the differential data generated by the differential generating unit 140 and reduced in bit width by the bit width reduction unit 620, instead of directly recording the differential data generated by the differential generating unit 140. In this way, with the data management system 100 according to the present variant, the amount of data needed to record the differential data can be reduced.

In addition, in the data management system 100 according to the present variant, the property changing unit 610 is capable of changing the filter property of the low-pass filter, as described above. Moreover, the data management

EP 3 929 684 B1

system 100 according to the present variant is capable of changing the extent to which the bit width reduction unit 620 reduces the bit width of the differential data, as described above. The data management system 100 according to the present variant can improve the difficulty for a person who acquired the reduced data and the differential data to estimate the raw measurement data by hiding such information related to filter property or information related to reduction of the bit width. In this way, with the data management system 100 according to the present variant, stronger measures can be taken against security issues such as leakage of raw measurement data.

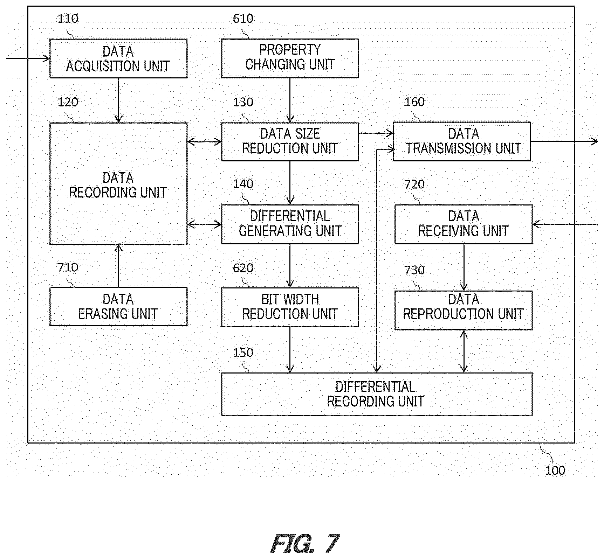

Fig. 7 illustrates an example of a block diagram of the data management system 100 according to another variant of the present embodiment. In Fig. 7, components having the same function and configuration as in Fig. 6 are given the same reference numerals, and the following describes only differing points. The data management system 100 according to the present other variant further includes a data erasing unit 710, a data receiving unit 720, and a data reproduction unit 730.

The data erasing unit 710 erases the recorded measurement data. As an example, the data erasing unit 710 erases, among the measurement data recorded in the data recording unit 120, the measurement data from which the reduced data and the differential data was generated.

The data receiving unit 720 receives the reduced data from another data utilization apparatus. As an example, the data receiving unit 720 requests, to the other data utilization apparatus, the reduced data transmitted to the other data utilization apparatus by the data transmission unit 160, and receives the same from the other data utilization apparatus. The data receiving unit 720 supplies the received reduced data to the data reproduction unit 730.

The data reproduction unit 730 reproduces the measurement data using the differential data and the reduced data. As an example, the data reproduction unit 730 may be capable of accessing the differential recording unit 150. The data reproduction unit 730 then reproduces the measurement data, which is the original data, using the differential data read from the differential recording unit 150 and the reduced data supplied from the data receiving unit 720 (for example, by adding the differential data to the moving average acquired by performing interpolation operation on the reduced data).

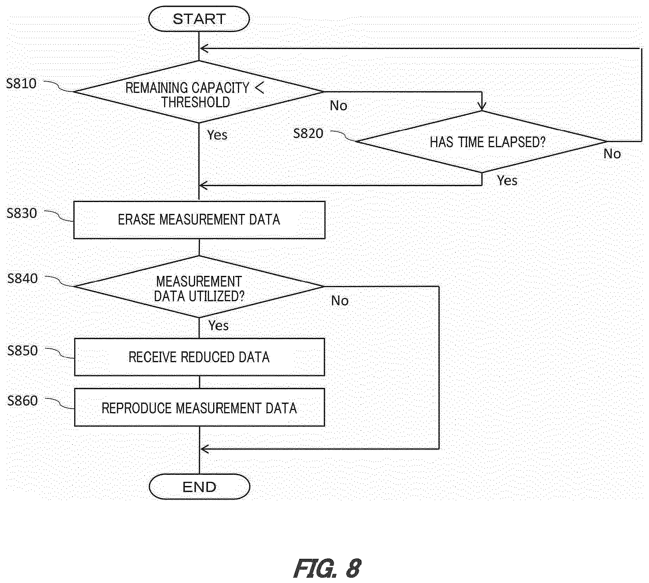

Fig. 8 illustrates an example of a flow for reproducing the measurement data by the data management system 100 according to another variant of the present embodiment.

At step 810, the data management system 100 according to the present other variant determines whether the remaining recordable capacity for the measurement data falls below a predetermined threshold. As an example, the data management system 100 calculates the remaining recordable capacity for the measurement data by subtracting the data capacity already recorded by the data recording unit 120 at step 220 in Fig. 2 from the whole recordable capacity for the measurement data. The data management system 100 then compares the remaining recordable capacity for the measurement data with the predetermined threshold. If it is determined that the remaining recordable capacity for the measurement data does not fall below the predetermined threshold (No), the data management system 100 proceeds the processing to step 820.

At step 820, the data management system 100 determines whether a predetermined time has elapsed. Such a predetermined time may be elapsed time after the measurement data has been recorded at step 220 in Fig. 2, for example. Alternatively or additionally, the predetermined time may be elapsed time after the recorded measurement data has been last accessed. If it is determined that the predetermined time has not elapsed (No), the data management system 100 returns the processing to step 810 and continues the flow.

On the other hand, if it is determined that the remaining recordable capacity for the measurement data falls below the predetermined threshold at step 810 (Yes), or if it is determined that the predetermined time has elapsed at step 820 (Yes), the data management system 100 proceeds the processing to step 830.

At step 830, the data management system 100 erases the measurement data. As an example, the data erasing unit 710 erases, among the measurement data recorded at step 220 in Fig. 2, the measurement data from which the reduced data and the differential data was generated at steps 230 and 240. In this manner, the data erasing unit 710 may erase the recorded measurement data in accordance with elapse of a predetermined time (in accordance with determination of Yes at step 810). In addition, the data erasing unit 710 may erase the recorded measurement data in accordance with the remaining recordable capacity for the measurement data falling below the predetermined threshold (in accordance with the determination of Yes at step 820).

At step 840, the data management system 100 determines whether utilization of said measurement data has been triggered after erasure of the measurement data. If it is determined that the utilization of the measurement data has not been triggered, the data management system 100 ends the flow. On the other hand, if it is determined that the utilization of the measurement data has been triggered, the data management system 100 proceeds the processing to step 850.

At step 850, the data management system 100 receives the reduced data. As an example, the data receiving unit 720 sends a request to the other data utilization apparatus to which the data transmission unit 160 transmitted the reduced data at step 260 in Fig. 2, and receives the reduced data from said other data utilization apparatus. The data receiving unit 720 supplies the received reduced data to the data reproduction unit 730.

At step 860, the data management system 100 reproduces the measurement data. As an example, the data reproduction unit 730 reproduces the measurement data which is the original data erased at step 830, using the differential data recorded in the differential recording unit 150 at step 250 in Fig. 2 and the reduced data supplied from the data receiving unit 720 at step 860 (by adding the differential data to the moving average acquired by performing interpolation operation on the reduced data, for example).

The data management system 100 according to the present other variant thus erases the recorded measurement data. In this way, the data management system 100 according to the present other variant can reduce the amount of data to be transmitted to the other data utilization apparatus, while also reducing the amount of data record in itself.

In addition, the data management system 100 according to the present other variant erases the measurement data if the remaining recordable capacity falls below the predetermined threshold, or in accordance with the elapse of a predetermined time. In this way, the data management system 100 according to the present other variant can erase the measurement data at timing when the amount of data of the recorded measurement data is desired to be reduced.

In addition, the data management system 100 according to the present other variant receives the reduced data from the other data utilization apparatus. In this way, the data management system 100 according to the present other variant can obtain the reduced data even in a case where the measurement data has been erased. In particular, the data management system 100 according to the present other variant reproduces the measurement data using the differential data and the reduced data. In this way, the data management system 100 according to the present other variant can reproduce and restore the measurement data even after the measurement data has been erased.

Note that, a case in which the reduced data is transmitted and received between the data management system 100 provided in the OT region and another data utilization apparatus provided in the IT region is illustrated as an example in the above-mentioned description. However, it is not limited thereto. For example, an aspect according to the present embodiment may be applied to a relationship between a field device or an I/O module and a controller in a process control system. That is, the data management system 100 may be a field device or an I/O module, and another data utilization apparatus may be a controller, such that the field device or the I/O module may transmit the reduced data to the controller while recording the differential data in itself. For example, even in a case where the controller and the field device or the I/O module are connected in an open network, there may be a security effect where, by hiding information related to filter properties or information related to the extent to which the bit width is reduced, it becomes difficult for a person who does not have such information to estimate the raw measurement data.

Various embodiments of the present invention may be described with reference to flowcharts and block diagrams, whose blocks may represent (1) steps of processes in which operations are performed or (2) sections of apparatuses responsible for performing operations. Certain steps and sections may be implemented by at least any of a dedicated circuitry, a programmable circuitry supplied with computer-readable instructions stored on computer-readable media, and/or processors supplied with computer-readable instructions stored on computer-readable media. A dedicated circuitry may include digital and/or analog hardware circuits and may include integrated circuits (IC) and/or discrete circuits. A programmable circuitry may include reconfigurable hardware circuits including logical AND, OR, XOR, NAND, NOR, and other logical operations, flip-flops, registers, memory elements such as field-programmable gate arrays (FPGA) and programmable logic arrays (PLA), and the like.

Computer-readable media may include any tangible device that can store instructions for execution by a suitable device, such that the computer-readable medium having instructions stored therein is provided with an article of manufacture including instructions which may be executed to create means for performing operations specified in the flowcharts or block diagrams. Examples of computer-readable media may include an electronic storage medium, a magnetic storage medium, an optical storage medium, an electromagnetic storage medium, a semiconductor storage medium, and the like. More specific examples of computer-readable media may include a Floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, and the like.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), and C++, and conventional procedural programming languages, such as the "C" programming language or similar programming languages.

Computer-readable instructions may be provided to a processor of a general-purpose computer, special purpose computer, or other programmable data processing apparatus, or to a programmable circuitry, locally or via a local area network (LAN), wide area network (WAN) such as the Internet, or the like, to execute the computer-readable instructions to create means for performing operations specified in the flowcharts or block diagrams. Examples of the processor include a computer processor, a processing unit, a microprocessor, a digital signal processor, a controller, a microcontroller, or the like.

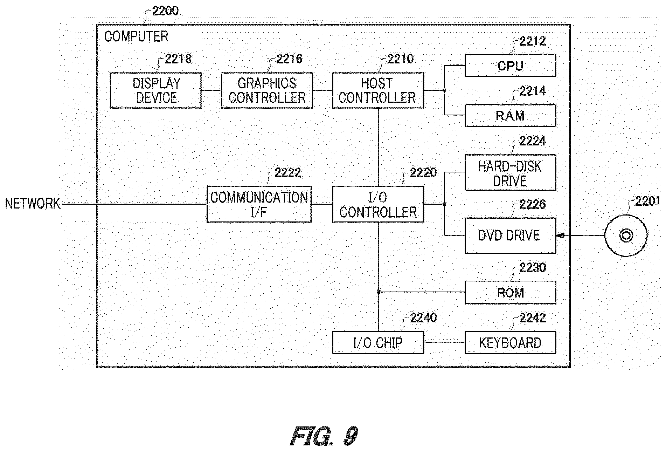

Fig. 9 illustrates an example of a computer 2200 in which a plurality of aspects of the present invention may be wholly or partially embodied. A program that is installed in the computer 2200 can cause the computer 2200 to function as or perform operations associated with apparatuses according to the embodiments of the present invention or one or more sections thereof, and/or cause the computer 2200 to perform processes according to the embodiments of the present invention or steps thereof. Such a program may be executed by a CPU 2212 to cause the computer 2200 to perform certain operations associated with some or all of the blocks of flowcharts and block diagrams described herein.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, and the like to the input/output controller 2220.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording media.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, or the like, and perform various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may perform various types of processing on the data read from the RAM 2214, including various types of operations, processing of information, condition judging, conditional branch, unconditional branch, search/replace of information, and the like, as described throughout this disclosure and designated by an instruction sequence of programs, and writes the result back to the RAM 2214. In addition, the CPU 2212 may search for information in a file, a database, or the like, in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer-readable media on the computer 2200 or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

10: plant
20: sensor
100: data management system
110: data acquisition unit
120: data recording unit
130: data size reduction unit
140: differential generating unit
150: differential recording unit
160: data transmission unit
610: property changing unit
620: bit width reduction unit
710: data erasing unit
720: data receiving unit
730: data reproduction unit
2200: computer
2201: DVD-ROM
2210: host controller
2212: CPU
2214: RAM
2216: graphics controller
2218: display device
2220: input/output controller
2222: communication interface
2224: hard disk drive
2226: DVD-ROM drive
2230: ROM
2240: input/output chip
2242: keyboards

**Claims**

1. A data management system (100) comprising:

a data acquisition unit (110) configured to acquire measurement data obtained by measuring a measurement target from one or more sensors;
a data recording unit (120) configured to record the acquired measurement data;
a data size reduction unit (130) configured to generate reduced data obtained by reducing an amount of data of the recorded measurement data;
a differential generating unit (140) configured to generate differential data indicating a difference between the recorded measurement data and the reduced data for each sensor in time series;
a differential recording unit (150) configured to record the differential data for each sensor in time series; and
a data transmission unit (160) configured to transmit the reduced data to another data utilization apparatus utilizing data, wherein
the data size reduction unit (130) has a low-pass filter for processing the recorded measurement data, and is configured to low-pass filter the recorded measurement data and sample the filtered data with a wide interval to generate the reduced data.

2. The data management system (100) according to claim 1, further comprising a property changing unit (610) capable of changing a filter property of the low-pass filter.

3. The data management system (100) according to claim 1 or 2, further comprising a bit width reduction unit (620) configured to reduce a bit width of the differential data to be recorded.

4. The data management system (100) according to any one of claims 1 to 3, further comprising a data erasing unit (710) configured to erase the recorded measurement data.

5. The data management system (100) according to claim 4, further comprising a data receiving unit (720) configured to request, to the other data utilization apparatus, the reduced data transmitted to the other data utilization apparatus by the data transmission unit (160), and receive the same from the other data utilization apparatus.

6. The data management system (100) according to claim 4 or 5, further comprising a data reproduction unit (730) configured to reproduce the measurement data using the differential data and the reduced data.

7. The data management system (100) according to any one of claims 4 to 6, wherein the data transmission unit (160) is configured to transmit the differential data to the other data utilization apparatus in response to a request from the other data utilization apparatus.

8. The data management system (100) according to any one of claims 4 to 7, wherein the data erasing unit (710) is configured to erase the recorded measurement data in response to elapse of a predetermined time.

9. The data management system (100) according to any one of claims 4 to 8, wherein the data erasing unit (710) is configured to erase the recorded measurement data in response to remaining recordable capacity for the measurement data falling below a predetermined threshold.

10. A computer-implemented data management method comprising:

   acquiring measurement data obtained by measuring a measurement target from one or more sensors;
   recording the acquired measurement data;
   generating reduced data obtained by reducing an amount of data of the recorded measurement data;
   generating differential data indicating a difference between the recorded measurement data and the reduced data for each sensor in time series;
   recording the differential data for each sensor in time series; and
   transmitting the reduced data to another data utilization apparatus utilizing data, wherein
   the generating reduced data includes low-pass filtering the recorded measurement data and sampling the filtered data with a wide interval to generate the reduced data.

11. A data management program which is executed by a computer to cause the computer to function as:

   a data acquisition unit configured to acquire measurement data obtained by measuring a measurement target from one or more sensors;
   a data recording unit configured to record the acquired measurement data;
   a data size reduction unit configured to generate reduced data obtained by reducing an amount of data of the recorded measurement data;
   a differential generating unit configured to generate differential data indicating a difference between the recorded measurement data and the reduced data for each sensor in time series;
   a differential recording unit configured to record the differential data for each sensor in time series; and
   a data transmission unit configured to transmit the reduced data to another data utilization apparatus utilizing data, wherein
   the data size reduction unit is configured to low-pass filter the recorded measurement data and sample the filtered data with a wide interval to generate the reduced data.

12. A computer readable recording medium storing the program according to claim 11.

**Patentansprüche**

1. Datenverwaltungssystem (100), das umfasst:

   eine Einheit (110) für Erfassung von Daten, die so konfiguriert ist, dass sie Messungsdaten erfasst, die durch Messen eines Messungs-Objektes von einem oder mehreren Sensor/en ermittelt werden;
   eine Einheit (120) zum Aufzeichnen von Daten, die so konfiguriert ist, dass sie die erfassten Messungsdaten aufzeichnet;
   eine Einheit (130) für Reduzierung einer Datengröße, die so konfiguriert ist, dass sie reduzierte Daten erzeugt, die durch Reduzieren einer Datenmenge der aufgezeichneten Messungsdaten gewonnen werden;
   eine Einheit (140) zum Erzeugen einer Differenz, die so konfiguriert ist, dass sie Differenzdaten erzeugt, die eine Differenz zwischen den aufgezeichneten Messungsdaten und den reduzierten Daten für jeden Sensor in Zeitreihe anzeigen;
   eine Einheit (150) zum Aufzeichnen einer Differenz, die so konfiguriert ist, dass sie die Differenzdaten für jeden Sensor in Zeitreihe aufzeichnet; sowie
   eine Einheit (160) für Datenübertragung, die so konfiguriert ist, dass sie die reduzierten Daten zu einer anderen Datennutzungs-Vorrichtung überträgt, die Daten nutzt, wobei
   die Einheit (130) für Reduzierung einer Datengröße ein Tiefpassfilter zum Verarbeiten der aufgezeichneten Messungsdaten aufweist und so konfiguriert ist, dass sie Tiefpassfiltern der aufgezeichneten Messungsdaten durchführt und die gefilterten Daten mit einem großen Intervall abtastet, um die reduzierten Daten zu erzeugen.

2. Datenverwaltungssystem (100) nach Anspruch 1, das des Weiteren eine Einheit (610) zum Ändern einer Eigenschaft umfasst, die eine Filtereigenschaft des Tiefpassfilters ändern kann.

3. Datenverwaltungssystem (100) nach Anspruch 1 oder 2, das des Weiteren eine -Einheit (620) für Reduzierung einer Bitbreite umfasst, die so konfiguriert ist, dass sie eine Bitbreite der aufzuzeichnenden Differenzdaten reduziert.

4. Datenverwaltungssystem (100) nach einem der Ansprüche 1 bis 3, das des Weiteren eine Einheit (710) zum Löschen von Daten umfasst, die so konfiguriert ist, dass sie die aufgezeichneten Messungsdaten löscht.

5. Datenverwaltungssystem (100) nach Anspruch 4, das des Weiteren eine Einheit (720) zum Empfangen von Daten umfasst, die so konfiguriert ist, dass sie die reduzierten Daten, die durch die Einheit (160) für Datenübertragung zu der anderen Datennutzungs-Vorrichtung übertragen wurden, von der anderen Datennutzungs-Vorrichtung anfordert und diese von der anderen Datennutzungs-Vorrichtung empfängt.

6. Datenverwaltungssystem (100) nach Anspruch 4 oder 5, das des Weiteren eine-Einheit (730) für Reproduktion von Daten umfasst, die so konfiguriert ist, dass sie die Messungsdaten unter Verwendung der Differenzdaten und der reduzierten Daten reproduziert.

7. Datenverwaltungssystem nach einem der Ansprüche 4 bis 6, wobei die Einheit (160) für Datenübertragung so konfiguriert ist, dass sie die Differenzdaten in Reaktion auf eine Anforderung von der anderen Datennutzungs-Vorrichtung zu der anderen Datennutzungs-Vorrichtung überträgt.

8. Datenverwaltungssystem nach einem der Ansprüche 4 bis 7, wobei die Einheit (710) zum Löschen von Daten so konfiguriert ist, dass sie die aufgezeichneten Messungsdaten in Reaktion auf Ablauf einer vorgegebenen Zeit löscht.

9. Datenverwaltungssystem nach einem der Ansprüche 4 bis 8, wobei die Einheit (710) zum Löschen von Daten so konfiguriert ist, dass sie die aufgezeichneten Messungsdaten in Reaktion darauf löscht, dass verbleibende zum Aufzeichnen verfügbare Kapazität für die Messungsdaten unter einen vorgegebenen Schwellenwert fällt.

10. Computerimplementiertes Datenverwaltungsverfahren, das umfasst:

   Erfassen von Messungsdaten, die durch Messen eines Messungs-Objektes von einem oder mehreren Sensor/en ermittelt werden;
   Aufzeichnen der erfassten Messungsdaten; sowie
   Erzeugen reduzierter Daten, die durch Reduzieren einer Datenmenge der aufgezeichneten Messungsdaten gewonnen werden;
   Erzeugen von Differenzdaten, die eine Differenz zwischen den aufgezeichneten Messungsdaten und den reduzierten Daten für jeden Sensor in Zeitreihe anzeigen;
Aufzeichnen der Differenzdaten für jeden Sensor in Zeitreihe; und
Übertragen der reduzierten Daten zu einer anderen Datennutzungs-Vorrichtung, die Daten nutzt, wobei das Erzeugen reduzierter Daten Tiefpassfiltern der aufgezeichneten Messungsdaten sowie Abtasten der gefilterten Daten mit einem großen Intervall zum Erzeugen der reduzierten Daten einschließt.

11. Datenverwaltungsprogramm, das von einem Computer ausgeführt wird, um den Computer zu veranlassen, zu arbeiten als:

eine Einheit für Erfassung von Daten, die so konfiguriert ist, dass sie Messungsdaten erfasst, die durch Messen eines Messungs-Objektes von einem oder mehreren Sensor/en ermittelt werden;
eine Einheit zum Aufzeichnen von Daten, die so konfiguriert ist, dass sie die erfassten Messungsdaten aufzeichnet; eine Einheit für Reduzierung einer Datengröße, die so konfiguriert ist, dass sie reduzierte Daten erzeugt, die durch Reduzieren einer Datenmenge der aufgezeichneten Messungsdaten gewonnen werden;
eine Einheit zum Erzeugen einer Differenz, die so konfiguriert ist, dass sie Differenzdaten erzeugt, die eine Differenz zwischen den aufgezeichneten Messungsdaten und den reduzierten Daten für jeden Sensor in Zeitreihe anzeigen;
eine Einheit zum Aufzeichnen einer Differenz, die so konfiguriert ist, dass sie die Differenzdaten für jeden Sensor in Zeitreihe aufzeichnet; sowie
eine Einheit für Datenübertragung, die so konfiguriert ist, dass sie die reduzierten Daten zu einer anderen Datennutzungs-Vorrichtung überträgt, die Daten nutzt, wobei
die Einheit für Reduzierung einer Datengröße so konfiguriert ist, dass sie Tiefpassfiltern der aufgezeichneten Messungsdaten durchführt und die gefilterten Daten mit einem großen Intervall abtastet, um die reduzierten Daten zu erzeugen.

12. Computerlesbares Medium, auf dem das Programm nach Anspruch 11 gespeichert ist.


**Revendications**

1. Système de gestion de données (100), comprenant :

une unité d'acquisition de données (110) configurée pour acquérir des données de mesure obtenues en mesurant une cible de mesure à l'aide d'un ou plusieurs capteurs ;
une unité d'enregistrement de données (120) configurée pour enregistrer les données de mesure acquises ;
une unité de réduction de taille de données (130) configurée pour générer des données réduites obtenues en réduisant la quantité de données des données de mesure enregistrées ;
une unité de génération différentielle (140) configurée pour générer des données différentielles indiquant une différence entre les données de mesure enregistrées et les données réduites pour chaque capteur dans des séries temporelles ;
une unité d'enregistrement différentiel (150) configurée pour enregistrer les données différentielles pour chaque capteur dans des séries temporelles ; et
une unité de transmission de données (160) configurée pour transmettre les données réduites à un autre appareil d'utilisation de données utilisant des données, dans lequel
l'unité de réduction de taille de données (130) comporte un filtre passe-bas pour traiter les données de mesure enregistrées, et est configurée pour effectuer un filtrage passe-bas des données de mesure enregistrées et pour échantillonner les données filtrées avec un large intervalle afin de générer les données réduites.

2. Système de gestion de données (100) selon la revendication 1, comprenant en outre une unité de changement de propriété (610) capable de changer une propriété de filtrage du filtre passe-bas.

3. Système de gestion de données (100) selon la revendication 1 ou 2, comprenant en outre une unité de réduction de largeur binaire (620) configurée pour réduire la largeur binaire des données différentielles à enregistrer.

4. Système de gestion de données (100) selon l'une quelconque des revendications 1 à 3, comprenant en outre une unité d'effacement de données (710) configurée pour effacer les données de mesure enregistrées.

5. Système de gestion de données (100) selon la revendication 4, comprenant en outre une unité de réception de données (720) configurée pour demander, à l'autre appareil d'utilisation de données, les données réduites transmises audit autre appareil d'utilisation de données par l'unité de transmission de données (160), et pour recevoir lesdites données réduites dudit autre appareil d'utilisation de données.

6. Système de gestion de données (100) selon la revendication 4 ou 5, comprenant en outre une unité de reproduction de données (730) configurée pour reproduire les données de mesure en utilisant les données différentielles et les données réduites.

7. Système de gestion de données (100) selon l'une quelconque des revendications 4 à 6, dans lequel l'unité de transmission de données (160) est configurée pour transmettre les données différentielles audit autre appareil d'utilisation de données en réponse à une demande provenant dudit autre appareil d'utilisation de données.

8. Système de gestion de données (100) selon l'une quelconque des revendications 4 à 7, dans lequel l'unité d'effacement de données (710) est configurée pour effacer les données de mesure enregistrées en réponse à l'écoulement d'un temps prédéterminé.

9. Système de gestion de données (100) selon l'une quelconque des revendications 4 à 8, dans lequel l'unité d'effacement de données (710) est configurée pour effacer les données de mesure enregistrées lorsque la capacité enregistrable restante pour les données de mesure tombe sous un seuil prédéterminé.

10. Procédé de gestion de données mis en œuvre par un ordinateur, comprenant :

l'acquisition de données de mesure obtenues en mesurant une cible de mesure à l'aide d'un ou plusieurs capteurs ;
l'enregistrement des données de mesure acquises ;
la génération de données réduites obtenues en réduisant une quantité de données des données de mesure enregistrées ;
la génération de données différentielles indiquant une différence entre les données de mesure enregistrées et les données réduites pour chaque capteur dans des séries temporelles ;
l'enregistrement des données différentielles pour chaque capteur dans des séries temporelles ; et
la transmission des données réduites à un autre appareil d'utilisation de données utilisant des données, dans lequel
la génération de données réduites comprend un filtrage passe-bas des données de mesure enregistrées et un échantillonnage des données filtrées avec un large intervalle pour générer les données réduites.

11. Programme de gestion de données exécuté par un ordinateur pour commander à l'ordinateur de fonctionner comme :

une unité d'acquisition de données configurée pour acquérir des données de mesure obtenues en mesurant une cible de mesure à l'aide d'un ou plusieurs capteurs ;
une unité d'enregistrement de données configurée pour enregistrer les données de mesure acquises ;
une unité de réduction de taille de données configurée pour générer des données réduites obtenues en réduisant une quantité de données des données de mesure enregistrées ;
une unité de génération différentielle configurée pour générer des données différentielles indiquant une différence entre les données de mesure enregistrées et les données réduites pour chaque capteur dans des séries temporelles ;
une unité d'enregistrement différentiel configurée pour enregistrer les données différentielles pour chaque capteur dans des séries temporelles ; et
une unité de transmission de données configurée pour transmettre les données réduites à un autre appareil d'utilisation de données utilisant des données, dans lequel
l'unité de réduction de taille de données est configurée pour effectuer un filtrage passe-bas des données de mesure enregistrées et pour échantillonner les données filtrées avec un large intervalle afin de générer les données réduites.

12. Support d'enregistrement lisible par ordinateur sur lequel est stocké le programme selon la revendication 11.

**FIG. 1**

16

FIG. 2

FIG. 3

FIG. 4

FIG. 5

FIG. 6

FIG. 7

```
                    ( START )
                        |
                        v
S810 ──< REMAINING CAPACITY <
           THRESHOLD >──── No ───> S820 ──< HAS TIME ELAPSED? >── No ──┐
              | Yes                                          | Yes      |
              |<──────────────────────────────────────────────         |
              v                                                         |
S830 ── [ ERASE MEASUREMENT DATA ]                                      |
              |                                                         |
              v                                                         |
S840 ──< MEASUREMENT
           DATA UTILIZED? >──── No ──┐                                  |
              | Yes                  |                                  |
              v                      |                                  |
S850 ── [ RECEIVE REDUCED DATA ]     |                                  |
              |                      |                                  |
              v                      |                                  |
S860 ── [ REPRODUCE MEASUREMENT DATA ]                                  |
              |<─────────────────────                                   |
              v                                                         |
          ( END )
```

*FIG. 8*

23

*FIG. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0117525 A2
- US 4691233 A

- JP 2011253491 A

### Non-patent literature cited in the description

- *Signal Processing Continuous and discrete,* 31 December 2008, 1-11, http://citenpl.internal.epo.org/wf/web/citenpl/citenpl.html? _url=https%3A%2F%2Focw.mit.edu%2Fcourses%2Fmechanical- engineering%2F2-161-signal-processing-continuous-and-discrete-fall-2008%2Fstudy-materials%2Fupdownsampling.pdf

- **LÜKE HANS DIETER.** *Signaliibertragung,* 31 December 1995, 204-206